# EUROPÄISCHE PATENTSCHRIFT

(11) **EP 2 894 411 B1**
(45) Veröffentlichungstag und Bekanntmachung des Hinweises auf die Patenterteilung: **07.03.2018**
(21) Anmeldenummer: 14004238.3
(22) Anmeldetag: 16.12.2014
(51) Int. Cl.: F24F 5/00, F24D 3/12

(54) **Kühldeckenkonstruktion und Verfahren zur Montage einer Kühldecke**
Cooling cover structure and method for mounting a cool ceiling
Construction de plafonds de refroidissement et procédé de montage d'un plafond chauffant et refroidissant

(30) Priorität: 18.12.2013 DE 102013021054
(43) Veröffentlichungstag der Anmeldung: 15.07.2015
(73) Patentinhaber: Schmöle GmbH, 58730 Fröndenberg (DE)
(72) Erfinder: Bitter, Dieter, 57413 Finnentrop (DE); Bitter, Kristina, 44139 Dortmund (DE)
(74) Vertreter: Roche, von Westernhagen & Ehresmann

(56) Entgegenhaltungen:
- WO-A1-2009/136423
- WO-A1-2012/126524
- DE-A1-102006 037 484
- NL-A- 9 301 049

## Beschreibung

Die Erfindung betrifft zunächst eine Kühldeckenkonstruktion nach dem Oberbegriff des Anspruches 1.

Derartige Kühldeckenkonstruktionen werden von der Anmelderin seit Jahrzehnten entwickelt und gefertigt.

Die bekannten Kühldeckenkonstruktionen umfassen in der Regel eine Vielzahl von Flächenwärmetauscherelementen, die an einer Deckenunterkonstruktion zu befestigen sind. Die Deckenunterkonstruktion wird zunächst deckenseitig angebracht, und umfasst eine Vielzahl von zueinander parallelen Metallprofilen. Diese werden auf Grund ihres C-förmigen oder im Wesentlichen C-förmigen Querschnittes in der Regel als C-Profile bezeichnet. Im Trockenbau ist die Erstellung einer solchen Deckenunterkonstruktion gängig.

Das Flächenwärmetauscherelement des Standes der Technik umfasst eine Trägerplatte, die z. B. aus einem etwa 1 mm dicken Metallblech, typischerweise einem Aluminiumblech, besteht. Dieses weist z. B. eine im Wesentlichen rechteckige Kontur auf.

Auf der Trägerplatte sind unter Zuhilfenahme von Wärmeübertragungselementen, den sogenannten Wärmeleitfolien, Rohrleitungsabschnitte eines Rohrleitungssystems angeordnet. Die Rohrabschnitte sind mechanisch und thermisch mit der Trägerplatte verbunden, und werden von einem Heiz- oder einem Kühlmedium, beispielsweise von Wasser durchströmt.

Die einzelnen Flächenwärmetauscherelemente sind modulartig aufgebaut, und können mit jeweils benachbarten Modulen zur Erzielung eines geschlossenen Kreislaufes für das Heizmedium oder Kühlmedium miteinander verbunden werden.

Es sind zahlreiche unterschiedliche Arten und Weisen bekannt, die Trägerplatte des Flächenwärmetauscherelementes an den C-Profilen zu befestigen. Typischerweise geschieht dies im Stand der Technik unter Zuhilfenahme von Befestigungsmitteln, die die Trägerplatte unmittelbar mit dem C-Profil verbinden.

Nach der Befestigung der Trägerplatte an dem C-Profil wird bei einem Verfahren des Standes der Technik sodann eine Gipskartonplatte untergeschraubt. Die Befestigung der Gipskartonplatte erfolgt unmittelbar durch Verschraubung in das C-Profil hinein. Die Trägerplatte des Flächenwärmetauscherelementes liegt also in fertig montiertem Zustand der Kühldeckenkonstruktion auf der Oberseite der Gipskartonplatte auf.

Um für eine effiziente Heizung, bzw. Kühlung des Gebäuderaumes zu sorgen, muss der Wärmeübergang zwischen dem Heiz- oder Kühlmedium innerhalb der Rohrabschnitte und der Gipskartonplatte optimiert werden.

Hierin liegt die Aufgabe der Erfindung.

Aus der nachveröffentlichten deutschen Patentanmeldung DE 10 2012 014 827 A1 der Anmelderin geht bereits eine Kühldeckenkonstruktion hervor, bei der ein thermisch leitendes Streifenelement vorgesehen ist, welches über einen Rand der Trägerplatte hinaus nach außen vorsteht. Dieses Streifenelement kann beispielsweise aus einem Karbonstreifen gebildet sein, und kann mit dem Metallprofil überlappen.

Aus der NL 9 301 049 A geht eine Kühldeckenkonstruktion nach dem Oberbegriff des Anspruches 1 hervor. Darüber hinaus zeigt die Druckschrift eine mechanische Anbringung der Trägerplatte an zumindest einem C-Profil unter Zuhilfenahme eines starr ausgebildeten Unterprofils. Das Unterprofil ist mittels Befestigungsmitteln gesondert von der Trägerplatte an dem C-Profil festgelegt. Es umfasst darüber hinaus einen Verbindungsabschnitt, an den die Trägerplatte zur Bewerkstelligung einer mechanischen Kopplung der Trägerplatte mit dem Unterprofil ankoppelbar ist. Die Druckschrift offenbart nicht, aus welchem Material das Unterprofil besteht. Demzufolge ist aus der Druckschrift auch nicht bekannt, dass das Unterprofil einen Verbindungsabschnitt aufweist, an den die Trägerplatte zur Bewerkstelligung einer thermischen Kopplung der Trägerplatte mit dem Unterprofil ankoppelbar ist. Schließlich zeigt die Druckschrift nicht, dass die Trägerplatte und das dieser Trägerplatte zugehörige Unterprofil jeweils gemeinsam von einer Gipskartonplatte Untergriffen sind, oder, dass das Unterprofil jeweils von zwei einander benachbarten Gipskartonplatten Untergriffen ist,

Die Erfindung löst die oben gestellte Aufgabe mit den Merkmalen des Anspruches 1.

Das Prinzip der Erfindung wird nachfolgend erläutert:
Die erfindungsgemäße Kühldeckenkonstruktion dient zur Anordnung in einem Gebäuderaum. Es kann sich dabei um jegliche Art von Gebäude, bzw. Gebäuderaum handeln.

Die Kühldeckenkonstruktion umfasst eine Mehrzahl von Flächenwärmetauscherelementen, die von ihrem Grundaufbau her den Flächenwärmetauscherelementen des Standes der Technik entsprechen können.

Ein Flächenwärmetauscherelement der erfindungsgemäßen Kühldeckenkonstruktion weist eine Trägerplatte auf. Als Trägerplatte im Sinne der Patentanmeldung wird in der Regel eine im Wesentlichen rechteckförmige metallische, vorzugsweise aus Aluminium bestehende Platte bezeichnet, die eine Wandstärke in der Größenordnung von beispielsweise 1 mm aufweisen kann. Die Trägerplatte kann quadratisch oder rechteckig ausgebildet sein. Auch andere Konturen sind von der Erfindung umfasst.

Auf der Trägerplatte sind Rohrleitungsabschnitte angeordnet, die von einem Kühl- oder Heizmedium durchströmbar sind. Die Rohrleitungsabschnitte können beispielsweise von einem Kupferrohr bereitgestellt sein. Rohrleitungsabschnitte, die einer ersten Trägerplatte zugeordnet sind, können mit Rohrleitungsabschnitten benachbarter Trägerplatten zu einem Rohrleitungssystem zusammengeschlossen werden, so dass ein Kreislauf eines Kühl- oder Heizmediums möglich ist.

Der Begriff Kühldeckenkonstruktion im Sinne der vorliegenden Patentanmeldung umfasst Klimadeckenkonstruktionen jeglicher Art. Es handelt sich bei einer Kühldeckenkonstruktion im Sinne der vorliegenden Patentanmeldung um solche Deckenkonstruktionen, die eine Temperierung des Gebäuderaumes, also eine Heizung und/oder eine Kühlung ermöglichen. Typischerweise sind Vorlauftemperaturen etwa zwischen 15° und 40° für das Heiz- oder Kühlmedium vorgesehen.

Die Rohrleitungsabschnitte sind thermisch mit der Trägerplatte verbunden, vorzugsweise unter Zuhilfenahme von Wärmeleitblechen oder Wärmeleitfolien, wie sie von der Patentanmelderin seit geraumer Zeit eingesetzt werden.

Die Trägerplatte ist mechanisch an zwei zueinander parallel ausgerichtete, deckenseitig festgelegte C-Profile angebunden. Als C-Profil im Sinne der vorliegenden Patentanmeldung wird jedes zur Bereitstellung einer Deckenunterkonstruktion geeignetes Metallprofil angesehen. Typischerweise werden diese jedoch - und dies auch unabhängig von ihrem exakten Querschnitt - als C-Profile bezeichnet.

Als C-Profile im Sinne der vorliegenden Patentanmeldung werden insbesondere sogenannte CW-Profile, also wandseitig festzulegende C-Profile, als auch CD-Profile, also deckenseitig festzulegende C-Profile verstanden.

Die Trägerplatte ist im Sinne der vorliegenden Patentanmeldung jeweils an zwei zueinander parallel ausgerichtete Profile angebunden. Dies bedeutet, dass jeweils eine Trägerplatte, und damit auch jeweils ein Flächenwärmetauscherelement, zwischen zwei zueinander parallelen Metallprofilen angeordnet wird.

Typischerweise erfolgt eine Anbindung der Trägerplatte an die Metallprofile jeweils entlang zweier einander gegenüberliegender Randbereiche der Trägerplatte.

Gemäß der Erfindung erfolgt die mechanische Anbindung der Trägerplatte an zumindest ein C-Profil unter Zuhilfenahme eines starr ausgebildeten Unterprofils. Das starr ausgebildete Unterprofil kann beispielweise von einem im Wesentlichen L-förmigen Profil, oder von einem anders ausgestalteten Profil bereitgestellt werden.

Das Unterprofil besteht vorzugsweise aus Metall, insbesondere aus einem Wärme gut leitenden Metall, wie Aluminium oder Kupfer. Es besteht auch die Möglichkeit, das Unterprofil aus einem anderen Material, wie beispielsweise aus Karbon herzustellen.

Das Unterprofil wird mittels Befestigungsmitteln an dem C-Profil festgelegt.

Die Festlegung des Unterprofils an dem Metallprofil erfolgt gesondert von der Befestigung der Trägerplatte an dem Unterprofil. Dies bedeutet, dass zunächst das starr ausgebildete Unterprofil an dem C-Profil mittels der Befestigungsmittel befestigt wird.

Beispielsweise kann das Unterprofil unter Zuhilfenahme eines Doppelklebebandes an dem C-Profil festgelegt werden.

Das Unterprofil weist einen Unterdeckungsabschnitt auf, mit dem die Unterseite des C-Profils unterdeckt wird. Vorzugsweise weist der Unterdeckungsabschnitt eine Breite auf, die der gesamten Breite der Unterseite des C-Profils entspricht. Die Breite des Unterdeckungsabschnittes kann auch größer sein als die Breite der Unterseite des C-Profils. Schließlich reicht es für die Verwirklichung der Erfindung auch aus, wenn der Unterdeckungsabschnitt eine Breite aufweist, die im Wesentlichen der Breite des C-Profils entspricht.

Der Unterdeckungsabschnitt untergreift jedenfalls das C-Profil.

Gemäß der Erfindung weist das Unterprofil des Weiteren einen Verbindungsabschnitt auf. An den Verbindungsabschnitt ist die Trägerplatte ankoppelbar. In Folge der Ankopplung der Trägerplatte an den Verbindungsabschnitt wird eine mechanische und thermische Kopplung der Trägerplatte mit dem Unterprofil bewerkstelligt. Die Kopplung kann beispielsweise unter Zuhilfenahme von Klemm- oder Clipselementen vorgenommen werden.

Die Ankopplung kann insbesondere in Folge eines Einsteckvorganges oder in Folge eines Aufhängevorganges oder in Folge eines Einhakungs-Vorganges bewerkstelligt werden. Insbesondere findet im Zuge dieser Ankopplung ein Formeingriff zwischen dem Verbindungsabschnitt des Unterprofils und einem Randabschnitt der Trägerplatte, dem sogenannten Umbiegungsabschnitt, der später noch erläutert wird, statt.

So ist es insbesondere denkbar, dass ein Umbiegungsabschnitt, insbesondere ein umgekanteter Randabschnitt der Trägerplatte, von einem z. B. U-förmig ausgebildeten Verbindungsabschnitt des Unterprofils nach Art einer Stecker-Buchse-Verbindung aufgenommen wird. Die mechanische Verbindung kann unter Zuhilfenahme von Klemmflächen, oder Halterungsflächen, oder Anschlagflächen, oder Wiederhaken, etc. erfolgen. Durch eine großflächige Kontaktierung wird ein guter thermischer Kontakt zwischen der Trägerplatte und dem Unterprofil erreicht.

Das gesondert an dem C-Profil festgelegte Unterprofil wird insoweit thermisch mit der Trägerplatte verbunden. Dabei ist es ausreichend, wenn das Unterprofil mit nur einer Trägerplatte in gutem thermischen Kontakt steht. Mit der gegenüberliegenden zweiten Trägerplatte kann das Unterprofil allerdings gleichermaßen mechanisch, sowie insbesondere auch thermisch verbunden sein. Hier kann beispielsweise ein weiterer Verbindungsabschnitt, oder auch ein Anbindungsabschnitt, vorgesehen sein, der für eine mechanische Kopplung der benachbarten anderen Trägerplatte mit dem gleichen Unterprofil sorgt. Dort kommt es allerdings nicht zwingend darauf an, auch einen weiteren guten thermischen Kontakt bereitzustellen.

Durch die Erfindung wird erreicht, dass auch die Abschnitte der Gipskartonplatte, die sich unterhalb des C-Profils befinden, thermisch an die Trägerplatte angebunden werden, so dass auch diese Abschnitte zur Kühlung, ggf. auch zur Heizung, des Gebäuderaumes optimiert beitragen können.

Als Kühldeckenkonstruktion im Sinne der vorliegenden Patentanmeldung wird nicht nur eine deckenseitig, sondern auch eine wandseitig festgelegte Deckenkonstruktion angesehen.

Bei dieser Ausführungsform der Erfindung sind die beiden parallel zueinander ausgerichteten Metallprofile, an denen eine Trägerplatte mechanisch angebunden wird, nicht deckenseitig, sondern wandseitig festgelegt.

Die Begriffe oben und unten - soweit in Bezug auf eine deckenseitig angebrachte Konstruktion verwendet - beziehen sich im Falle einer wandseitig festgelegten Deckenkonstruktion auf das Zentrum des Raumes. Ein Unterprofil im Sinne der vorliegenden Patentanmeldung, welches einen Unterdeckungsabschnitt aufweist, entspricht bei solchen wandseitig, also nicht deckenseitig, festgelegten Konstruktionen, insoweit einem rauminnenseitig angeordneten Profil, welches rauminnenseitig ein Metallprofil abdeckt.

Bei den Ausführungsbeispielen erfindungsgemäßer Kühldeckenkonstruktionen, die nicht Gebäuderaum-deckenseitig festgelegt sind, sondern Gebäuderaum-wandseitig festgelegt sind, wird als Deckenunterkonstruktion die Mehrzahl der wandseitig festgelegten Metallprofile verstanden. Auf diese wird diesen Ausführungsbeispielen der Erfindung eine Gipskartonplatte rauminnenseitig aufgeschraubt.

Gemäß einer vorteilhaften Ausgestaltung der Erfindung besteht das Unterprofil aus Metall, insbesondere aus Aluminium oder Kupfer oder aus einem anderen, Wärme gut leitenden Material. Je besser das Unterprofil Wärme leitet, um so besser wird der Abschnitt der Gipskartonplatte unterhalb des C-Profils aktiviert.

Das Unterprofil kann allerdings auch aus Stahl bestehen, einem im Verhältnis zu Aluminium oder Kupfer eher schlechter wärmeleitenden Material. Da das in diesem Falle aus Stahl bestehende Unterprofil allerdings auch in thermischem Kontakt mit dem C-Profil selbst steht, würde selbst durch Verwendung eines aus Stahl bestehenden Unterprofils die thermische Anbindung der Gipskartonplatte dennoch verbessert.

In Frage kommt auch die Verwendung von nicht-metallischen Materialen, wie z. B. Karbon, für das Unterprofil. In diesem Fall müssen unter Umständen aber besondere Maßnahmen getroffen werden, um eine gesonderte Befestigung des Unterprofils unmittelbar an dem C-Profil zu ermöglichen. Dabei kommt es möglicherweise in Betracht, das Karbon einer besonderen Formgebung zu unterziehen, bzw. das Karbon in eine geeignete Hüllkontur einzubetten oder auf andere Weise in Form zu bringen.

Vorteilhaft weist das Unterprofil einen Unterdeckungsabschnitt auf, mit einer Breite, die der gesamten oder im Wesentlichen gesamten Breite der Unterseite des C-Profils entspricht.

Der Unterdeckungsabschnitt untergreift insoweit das C-Profil im Wesentlichen vollständig.

Von der Erfindung umfasst sind auch Unterprofile mit Unterdeckungsabschnitten, die eine nur geringere Breite als die Unterseite des C-Profils aufweisen. Hier gilt jedoch, dass in dem Maße, in dem der Unterdeckungsabschnitt das C-Profil nicht untergreift, auch die Aktivierung der Gipskartonplatte in dem Bereich unterhalb des C-Profils nicht oder nicht optimiert erfolgen kann.

Gemäß einer weiteren vorteilhaften Ausgestaltung der Erfindung weist das Unterprofil zwei Verbindungsabschnitte auf zwei unterschiedlichen Seiten des Unterdeckungsabschnittes auf. Alternativ kann bei einer Ausführungsform der Erfindung das Unterprofil einen Verbindungsabschnitt und einen Anbindungsabschnitt auf zwei unterschiedlichen Seiten des Unterdeckungsabschnittes aufweisen.

Als Verbindungsabschnitt wird dabei ein solcher Abschnitt eines Unterprofils angesehen, der eine mechanische und thermische Verbindung zwischen dem Unterprofil und der Trägerplatte gewährleistet. Als Anbindungsabschnitt des Unterprofils wird derjenige Abschnitt angesehen, der eine überwiegend mechanische und nicht zwingend auch eine gute thermische Verbindung zwischen Unterprofil und Trägerplatte gewährleistet.

Für den Fall, dass zwei Verbindungsabschnitte an einem Unterprofil angeordnet sind, oder dass ein Verbindungsabschnitt und ein Anbindungsabschnitt an einem Unterprofil angeordnet sind, dienen diese Abschnitte jeweils der Bewerkstelligung einer Verbindung des an dem C-Profil festgelegten Unterprofils mit einer Trägerplatte. Die beiden unterschiedlichen Abschnitte dienen also der Bewerkstelligung einer Verbindung des Unterprofils mit zwei unterschiedlichen Trägerplatten.

Dabei kann vorgesehen sein, dass das Unterprofil bezüglich einer Mittellängsachse spiegelsymmetrisch ausgebildet ist. Es kann aber auch vorgesehen sein, dass die beiden Abschnitte unterschiedlich ausgebildet sind, und insoweit, bezogen auf die Längsmittelachse des Unterdeckungsabschnittes, das Unterprofil eine insgesamt asymmetrische Geometrie aufweist.

Gemäß einer vorteilhaften Ausgestaltung der Erfindung weist der Unterdeckungsabschnitt eine Wandstärke auf, die ein Durchbohren mittels Gipskarton-Schrauben zulässt. Typischerweise weist der Unterdeckungsabschnitt - insbesondere wenn das Unterprofil aus Aluminium besteht - eine Wandstärke von etwa 0,4 mm bis 0,7 mm auf.

Bei diesen dünnen Wandstärken ist einerseits ein Durchbohren mit einer Befestigungsschraube ohne weiteres möglich. Zum anderen sind diese weichen Profile in der Lage, Unebenheiten in dem C-Profil, bzw. Montagetoleranzen auf einfache Weise auszugleichen.

Gemäß einer weiteren vorteilhaften Ausgestaltung der Erfindung ist die Trägerplatte mit einer Wandstärke ausgestattet, die größer ist als die Wandstärke des Unterdeckungsabschnittes. Beispielsweise kann die Trägerplatte eine Wandstärke von etwa 1 mm aufweisen, was insbesondere gilt, wenn die Trägerplatte aus Aluminium besteht.

Gemäß einer weiteren vorteilhaften Ausgestaltung der Erfindung weist der Verbindungsabschnitt Klemmmittel oder Clipsmittel auf, die mit komplementären Gegenmitteln oder Gegenclipsmitteln an der Trägerplatte in Eingriff bringbar sind.

Die Klemmmittel oder Clipsmittel am Verbindungsabschnitt können beispielsweise von einer U-förmig ausgebildeten Aufnahme bereitgestellt sein, in die steckartige Ansätze (also gebildet durch Gegenklemmmittel oder Gegenclipsmittel) an der Trägerplatte einsetzbar sind. Diese steckartigen Ansätze können beispielsweise von Umbiegungsabschnitten an der Trägerplatte bereitgestellt sein.

Es können auch Formeingriffsmittel eines Verbindungsabschnittes mit Gegenformangriffsmitteln an der Trägerplatte kooperieren. So kann beispielsweise vorgesehen sein, dass ein Verbindungsabschnitt im Wesentlichen klauenartig, dabei insbesondere im Wesentlichen bischofsstabförmig, ausgebildet ist und mit einem entsprechenden hakenartig oder klauenartig ausgebildeten Verbindungsabschnitt an der Trägerplatte in Eingriff bringbar ist.

Schließlich können auch Halte- und Gegenhalteflächen einerseits an dem Verbindungsabschnitt, oder an einem Anbindungsabschnitt, und andererseits an der Trägerplatte vorgesehen sein, um einen mechanischen Halt zu gewährleisten.

Gemäß einer vorteilhaften Ausgestaltung der Erfindung ist das Unterprofil vermittels einer Klebung an dem C-Profil festgelegt. Insbesondere kann vorgesehen sein, dass an dem Unterdeckungsabschnitt hierzu ein Doppelklebeband festgelegt ist, welches auf besonders einfache Weise eine Befestigung des Unterprofils an dem C-Profil ermöglicht.

Dabei kann vorgesehen sein, dass das Doppelklebeband eine Breite aufweist, die im Wesentlichen oder fast der Breite des Unterdeckungsabschnittes entspricht.

Gemäß einer weiteren vorteilhaften Ausgestaltung der Erfindung sind die Trägerplatte und das dieser Trägerplatte zugehörige Unterprofil jeweils gemeinsam von einer Gipskartonplatte untergriffen. Dabei ist insbesondere vorgesehen, dass eine Gipskartonplatte jeweils etwa die Hälfte der Fläche des Unterdeckungsabschnittes des Unterprofils untergreift. Dies gilt insbesondere dann, wenn zwei Gipskartonplatten im Wesentlichen auf Stoß aneinander liegen, und die Stoßfuge etwa mittig unterhalb eines C-Profils verläuft.

Anders ausgedrückt kann insbesondere vorgesehen sein, dass ein Unterprofil von zwei einander benachbarten Gipskartonplatten untergriffen wird.

Gemäß einem weiteren Aspekt wird bei einer Kühldeckenkonstruktion der thermische Übergang zwischen dem in dem Rohrleitungssystem befindlichen Kühl- oder Heizmedium und der Gipskartonplatte optimiert, insbesondere vergleichmäßigt.

Die Trägerplatte ist hierzu in einem Vormontagezustand mechanisch an zwei zueinander parallel ausgerichtete Metallprofile, den sogenannten C-Profilen angebunden, und steht in diesem Vormontagezustand über eine Unterseite des C-Profils hinaus nach unten vor.

In einem Endmontagezustand ist die Trägerplatte von einer Gipskartonplatte untergriffen, die an den beiden C-Profilen festgeschraubt wird. Bei Anbringung der Gipskartonplatte ist die Trägerplatte gegen die Federkraft einer Spanneinrichtung in eine bündige Anordnung zu der Unterseite des C-Profils verlagerbar. Es ist also eine Spanneinrichtung vorgesehen, die eine Federkraft ausübt, gegen die bei Anordnung der Gipskartonplatte zugleich eine nach-oben-Verlagerung der Trägerplatte stattfinden muss.

Im fertig montierten Zustand übt die Spanneinrichtung insoweit dauerhaft einen Druck auf die Trägerplatte hin zur Gipskartonplatte aus. Durch diese Beaufschlagung wird ein guter, dicht anliegender Kontakt zwischen Trägerplatte und Gipskartonplatte erreicht. Hierdurch wird der Wärmeübergang optimiert.

Gemäß einer vorteilhaften Ausgestaltung der Erfindung erfolgt die mechanische Anbindung der Trägerplatte an zumindest ein C-Profil unter Zuhilfenahme eines starr ausgebildeten Unterprofils. Dabei kann es sich um das zuvor bezüglich der zuvor geschilderten Ansprüche beschriebene Unterprofil handeln. Das Unterprofil ist gesondert von der Trägerplatte mittels Befestigungsmitteln an dem C-Profil festgelegt. Das Unterprofil weist einen Verbindungsabschnitt auf, an dem zur Bewerkstelligung einer mechanischen und thermischen Kopplung der Trägerplatte mit dem Unterprofil die Trägerplatte ankoppelbar ist.

Die Spanneinrichtung ist dabei an dem Unterprofil angeordnet. Hierdurch wird eine besonders einfache Konstruktion erreicht. Insbesondere ist diese Spanneinrichtung Bestandteil eines Anbindungsabschnittes an dem Unterprofil, wie ein solcher Anbindungsabschnitt zuvor bereits beschrieben worden ist.

Gemäß einem weiteren Aspekt betrifft die Erfindung ein Verfahren zur Montage einer Kühldecke.

Der Erfindung liegt die Aufgabe zugrunde, das bekannte Verfahren zur Montage einer Kühldecke zu vereinfachen.

Die Erfindung löst diese Aufgabe mit den Merkmalen des Anspruches 8.

Erfindungsgemäß wird zunächst eine Deckenunterkonstruktion mit zueinander parallel ausgerichteten Metallprofilen, den sogenannten C-Profilen, an der Decke eines Gebäuderaumes angebracht.

Sodann werden Unterprofile an der Unterseite der C-Profile angebracht, insbesondere angeklebt. Die Unterprofile weisen jeweils wenigstens einen Unterdeckungsabschnitt auf, mit dem sie eine Unterseite des C-Profils unterdecken, insbesondere vollständig oder im Wesentlichen vollständig unterdecken.

Die Unterprofile weisen darüber hinaus einen Verbindungsabschnitt auf, an den eine Trägerplatte ankoppelbar ist. Auf der Trägerplatte sind Rohrleitungsabschnitte angeordnet. Diese sind von einem Kühl- oder einem Heizmedium durchströmbar. Die Rohrleitungsabschnitte stehen thermisch mit der Trägerplatte in Verbindung, beispielsweise unter Zuhilfenahme von Wärmeleitfolien.

Gemäß der Erfindung wird des Weiteren eine Verbindung zwischen dem Verbindungsabschnitt und der Trägerplatte bewerkstelligt. Die Verbindung kann beispielsweise durch Einklemmen, Einhaken, Einclipsen, etc. bewerkstelligt werden.

Schließlich wird eine Gipskartonplatte mittels Verschraubung an den C-Profilen angebracht. Die Gipskartonplatte unterdeckt die jeweilige Trägerplatte und z. B. den hälftigen oder den vollständigen Unterdeckungsabschnitt. Die Verschraubung der Gipskartonplatte durchgreift den Unterdeckungsabschnitt. Anders ausgedrückt werden die Schrauben, mittels denen die Gipskartonplatte festgelegt wird, durch den Unterdeckungsabschnitt hindurch in das C-Profil eingeschraubt.

Das erfindungsgemäße Verfahren ermöglicht eine besonders einfache und sichere Montage und gewährleistet dauerhaft eine gute Funktionsweise der Kühldeckenkonstruktion.

Gemäß einem weiteren Aspekt ist ein Flächenwärmetauscherelement derart weitergebildet, dass eine optimierte thermische und/oder mechanische Anbindung der Trägerplatte an das Metallprofil, insbesondere an das C-Profil, möglich wird.

Hierzu sind an mindestens einem Randabschnitt der Trägerplatte, insbesondere an zwei einander gegenüberliegenden Randbereichen der Trägerplatte, Umbiegungsabschnitte zur Verbindung mit einem Unterprofil vorgesehen.
Diese Umbiegungsabschnitte erstrecken sich aus der Ebene der Trägerplatte heraus, insbesondere nach oben hin, und sind einstückig stoffschlüssig mit der Trägerplatte verbunden.

Die beiden Umbiegungsabschnitte können gleich oder unterschiedlich ausgebildet sein. Somit kann z. B. vorgesehen sein, dass der jeweilige Umbiegungsabschnitt einfach oder mehrfach abgekantet ist.

Hierdurch wird eine in konstruktiver Hinsicht besonders einfache Möglichkeit bereitgestellt, die Trägerplatte mechanisch oder thermisch und mechanisch mit einem Unterprofil zu verbinden. Das Unterprofil kann an dem Metallprofil oder an dem C-Profil unmittelbar festgelegt sein.

Gemäß einem weiteren Aspekt wird bei einer Kühldeckenkonstruktion der Wärmeübergang zwischen dem Heiz- oder Kühlmedium innerhalb der Rohrabschnitte und der Gipskartonplatte optimiert.

Hierzu weist zumindest ein C-Profil einen Verbindungsabschnitt als integralen Bestandteil des C-Profils auf, an den die Trägerplatte zur Bewerkstelligung einer mechanischen und thermischen Kopplung der Trägerplatte mit dem C-Profil ankoppelbar ist.

Das Prinzip besteht somit im Wesentlichen darin, an dem C-Profil selbst einen Verbindungsabschnitt integral auszubilden. Als Verbindungsabschnitt wird - im Sinne einer konsistenten Terminologie auf die obige, eingangs beschriebene Definition verwiesen. Demnach wird als Verbindungsabschnitt ein solcher Abschnitt angesehen, der eine mechanische und eine thermische Verbindung zwischen der Trägerplatte und dem C-Profil gewährleistet.

Insbesondere soll ein Verbindungsabschnitt im Sinne der vorliegenden Erfindung eine Aktivierung der im Montagezustand im Wesentlichen parallel zu der Montagefläche des C-Profils verlaufenden Bodenfläche des C-Profils, bzw. der dieser Fläche gegenüberliegenden Abschnitte der Gipskartonplatte ermöglichen.

Das C-Profil kann aus einem gut wärmeleitenden Material bestehen, beispielsweise aus Aluminium oder Kupfer. Der Verbindungsabschnitt kann im Zuge der Herstellung des C-Profils als integraler Bestandteil des Profils mit angeformt werden. Beispielsweise kann der Verbindungsabschnitt die Form einer axial verlaufenden schlitzförmigen Aufnahme bereitstellen. In diese Aufnahme hinein kann ein abgekanteter oder umbogener Abschnitt der Trägerplatte zur Erzielung einer mechanischen und zugleich einer thermischen Kopplung der Trägerplatte mit dem C-Profil eingreifen.

Das C-Profil kann darüber hinaus - ähnlich wie herkömmliche C-Profile des Standes der Technik - Versteifungssicken oder dergleichen aufweisen. Das C-Profil kann z. B. als Stranggussprofil hergestellt sein.

Das C-Profil kann nur einen Verbindungsabschnitt zur Verbindung dieses C-Profils mit nur einer Trägerplatte, oder alternativ auch zwei Verbindungsabschnitte zur Verbindung dieses C-Profils mit zwei Trägerplatten an unterschiedlichen Seiten des C-Profils aufweisen.

Gemäß einem weiteren Aspekt besteht bei einer Kühldeckenkonstruktion zumindest ein C-Profil aus Aluminium.

Damit wird ein C-Profil aus Aluminium bereitgestellt. Aluminium ist ein sehr gut wärmeleitendes Material. C-Profile des Standes der Technik bestehen üblicherweise aus Stahl.

Die Bereitstellung eines C-Profils aus Aluminium erlaubt - bei gleichen oder im Wesentlichen gleichen äußeren Abmessungen, wie Breite und Höhe, bei im Wesentlichen gleicher Wandstärke ohne Verlust an Steifigkeit und unter Möglichkeit des Rückgriffes auf herkömmliche Befestigungsarten eine verbesserte thermische Kopplung zwischen Trägerplatte und C-Profil. Dies ermöglicht insbesondere eine Aktivierung der Bodenseite des C-Profils, also derjenigen Fläche, die im Wesentlichen parallel zu der Fläche ausgerichtet ist, an der das C-Profil montiert wird.

Im Übrigen kann auf die zu dem vorherigen Anspruch geschilderten Vorteile zur Vermeidung von Wiederholungen analog zurückgegriffen werden.

Des Weiteren wird ein C-Profil offenbart.

C-Profile des Standes der Technik dienen zur Anbringung an einer Wand (sogenanntes CW-Profil), oder zur Anbringung an einer Decke (sogenanntes CD-Profil). Das C-Profil weist einen im Wesentlichen C-förmigen - oder U-förmigen - Querschnitt auf. Typischerweise wird ein C-Profil des Standes der Technik unmittelbar auf eine Wand- oder Deckenfläche geschraubt.

Es wird ein C-Profil bereitgestellt, mit dem eine verbesserte thermische Kopplung zu einer Trägerplatte eines Wärmetauscherelementes erfolgen kann.

Hierzu ist an dem C-Profil eine im Wesentlichen schlitzförmige Klemm-Aufnahme integral angeformt, zur Verbindung mit einer Trägerplatte zur Erzielung einer mechanischen und thermischen Kopplung.

Das Prinzip besteht im Wesentlichen darin, dass als integraler Bestandteil des C-Profils daran ein im Wesentlichen schlitzförmiger Klemm-Aufnahmeschlitz angeformt ist. Der Aufnahmeschlitz dient der Aufnahme einer Abkantung der Trägerplatte zur Erzielung einer mechanischen und thermischen Kopplung der Trägerplatte mit dem C-Profil. Da auf Grund der integralen Ausbildung der Klemmaufnahme an dem C-Profil eine - bezogen auf die Axialerstreckung des C-Profils - durchgehende, und damit großflächige mechanische und thermische Kopplung möglich ist, wird dadurch die Möglichkeit bereitgestellt, auch den Bereich der Gipskartonplatte unterhalb des C-Profils thermisch zu aktivieren. Außerdem wird durch die Erfindung ermöglicht, das C-Profil aus einem Wärme gut leitenden Material, beispielsweise Aluminium, zu fertigen.

Weitere Vorteile ergeben sich aus den nicht zitierten Unteransprüchen, sowie aus der nachfolgenden Beschreibung der in den Zeichnungen dargestellten Ausführungsbeispiele. Darin zeigen:
- Fig. 1: in einer teilgeschnittenen schematischen Ansicht einen Schnitt durch eine erfindungsgemäße Deckenkonstruktion mit drei Metallprofilen und zwei Flächenwärmetauscherelementen, die sich in einem Vormontagezustand befinden, und die jeweils zwischen zwei Metallprofilen angeordnet sind,
- Fig. 2: in einer vergrößerten Darstellung in einer teilgeschnittenen, schematischen Ansicht die Deckenkonstruktion der Fig. 1 etwa entlang der Teilkreisdarstellung II in Fig. 1,
- Fig. 3: eine Draufsicht auf ein Flächenwärmetauscherelement gemäß Ansichtspfeil III in Fig. 2 in Einzeldarstellung, in nicht maßstäblicher Darstellung,
- Fig. 4: in einer teilgeschnittenen schematischen Ansicht ein Ausführungsbeispiel eines Unterprofils mit daran befestigtem Klebeband,
- Fig. 5: in einer Darstellung gemäß Fig. 4 ein weiteres Ausführungsbeispiel eines Unterprofils, wie dargestellt in der Ausführungsform der Fig. 2,
- Fig. 6: die Kühldeckenkonstruktion der Fig. 2 vor Anbringung der Gipskartonplatten in einem Zustand, in dem die Trägerplatte nur einseitig in einen Anbindungsabschnitt des Unterprofils eingehängt ist,
- Fig. 7: die Kühldeckenkonstruktion der Fig. 6 nach Verschwenkung der Trägerplatte entgegen dem Uhrzeigersinn um etwa 65°, ausgehend von der Position in Fig. 6, wobei das rechte Ende der Trägerplatte, der sogenannte Umbiegungsbereich, an den Verbindungsbereich des Unterprofils der Trägerplatte angeklemmt ist,
- Fig. 8: eine Darstellung gemäß Fig. 2, wobei ein Unterprofil vollständig von einer größer ausgebildeten Gipskartonplatte untergriffen wird,
- Fig. 9: eine weitere Ausführungsform eines Unterprofils in einer Darstellung gemäß Fig. 5,
- Fig. 10: eine Deckenkonstruktion in einer Darstellung gemäß Fig. 7 unter Verwendung eines Unterprofils gemäß Fig. 9,
- Fig. 11: die Kühldeckenkonstruktion der Fig. 10 mit angebrachter Gipskartonplatte,
- Fig. 12: ein Ausführungsbeispiel eines erfindungsgemäßen, beispielsweise aus Aluminium bestehenden C-Profils in einem schematischen Querschnitt,
- Fig. 13: das C-Profil der Fig. 12 in schematischer Draufsicht, etwa gemäß Ansichtspfeil XIII in Fig. 12,
- Fig. 14: das C-Profil der Fig. 12 in einer schematischen Seitenansicht, etwa entlang Ansichtspfeil XIV in Fig. 12,
- Fig. 15: ein weiteres Ausführungsbeispiel eines erfindungsgemäßen C-Profils, beispielsweise aus Aluminium, mit beidseitig angebrachten Verbindungsabschnitten, in einer Darstellung gemäß Fig. 12,
- Fig. 16: ein weiteres Ausführungsbeispiel eines erfindungsgemäßen C-Profils, beispielsweise aus Aluminium, mit zwei unterschiedlich ausgebildeten Verbindungsabschnitten, und
- Fig. 17: ein Ausführungsbeispiel einer erfindungsgemäßen Kühldeckenkonstruktion in einer Darstellung gemäß Fig. 1 unter Verwendung von zwei C-Profilen gemäß Fig. 15.

Mehrere Ausführungsbeispiele einer erfindungsgemäßen und in ihrer Gesamtheit mit 10 bezeichneten Kühldeckenkonstruktion, sowie mehrere Ausführungsbeispiele eines erfindungsgemäßen und in seiner Gesamtheit in den nachfolgenden Zeichnungen mit 13 bezeichneten Flächenwärmetauscherelementes sind nachfolgend in den Figuren beschrieben.

Der detaillierten Figurenbeschreibung wird vorausgeschickt, dass der Einfachheit und der Übersichtlichkeit halber gleiche oder miteinander vergleichbare Teile oder Elemente mit gleichen Bezugszeichen, teilweise unter Hinzufügung kleiner Buchstaben bezeichnet sind.

Auch sei an dieser Stelle angemerkt, dass Merkmale, die nur an einem Ausführungsbeispiel oder in Bezug zu einem Aspekt der Erfindung konkret beschrieben sind, auch bei anderen Ausführungsbeispielen der Erfindung und bei anderen Aspekten der Erfindung vorgesehen sein können, und derartige Ausführungsbeispiele und Änderungen von der Erfindung mit umfasst sind.

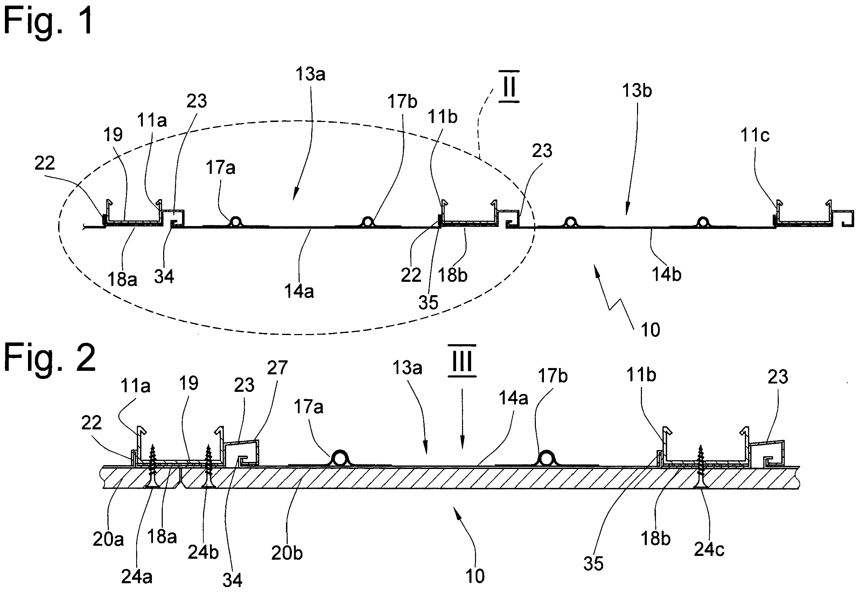

Ausweislich Fig. 1 ist eine erfindungsgemäße Kühldeckenkonstruktion 10 schematisch dargestellt.

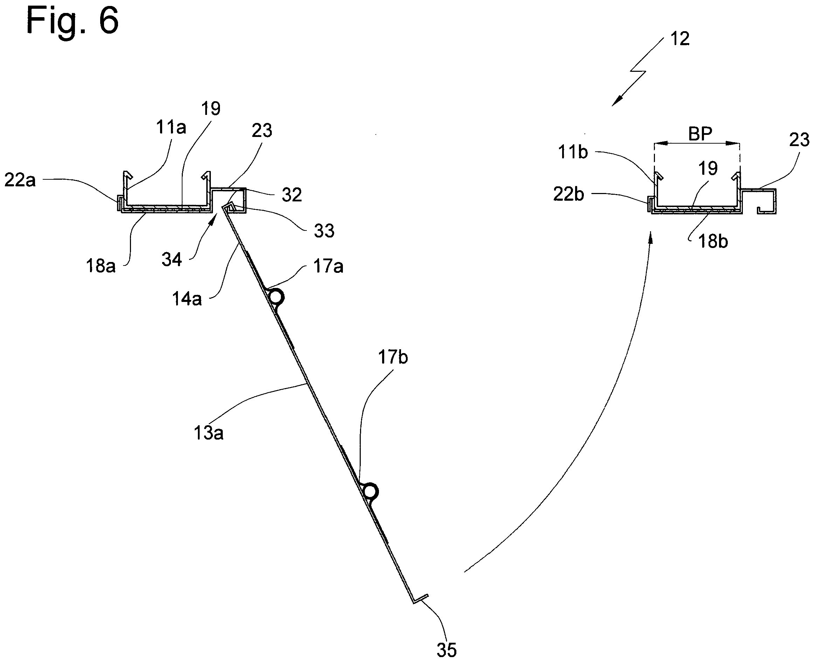

An der nicht dargestellten Decke eines Gebäuderaumes wird zunächst eine Deckenunterkonstruktion 12 (vgl. Fig. 6) befestigt, die mehrere parallel zueinander verlaufende Metallprofile 11a, 11b, 11c umfasst. Auf Grund ihres im Wesentlichen C-förmigen Querschnittes werden diese Metallprofile auch als C-Profile bezeichnet.

Wie im Trockenbau üblich, werden diese C-Profile relativ zu der Decke festgelegt. Die Art der Festlegung ist in den Zeichnungen nicht dargestellt.

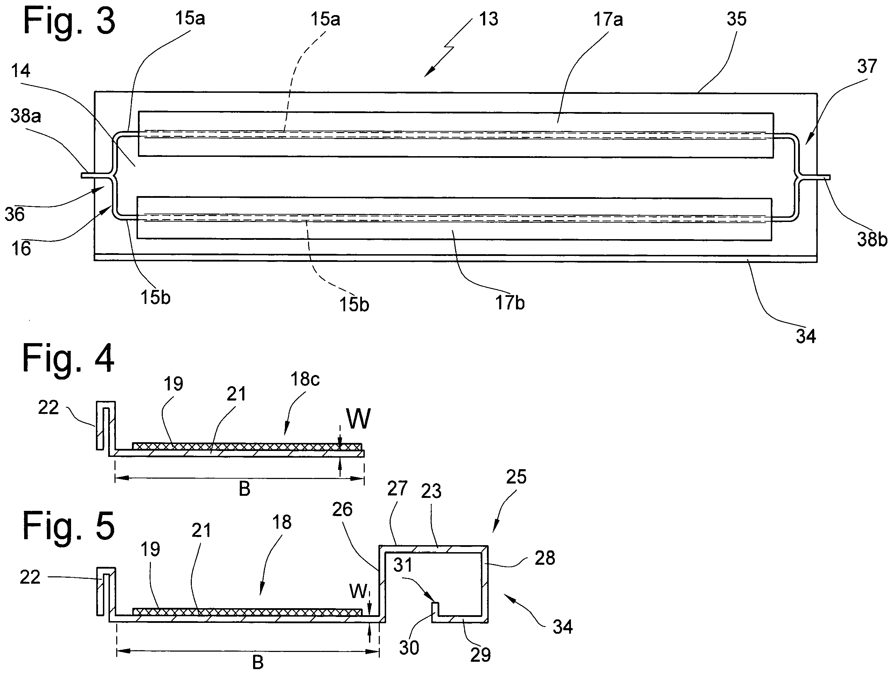

Zwischen jeweils zwei C-Profilen 11a, 11c wird ein Flächenwärmetauscherelement 13 angeordnet. Dieses wird der Übersichtlichkeit halber zunächst anhand der schematischen Zeichnung der Fig. 3 in Draufsicht beschrieben.

Fig. 3 zeigt ein im Wesentlichen rechteckförmiges, langgestrecktes Flächenwärmetauscherelement 13. Von der Erfindung umfasst sind aber auch solche Flächenwärmetauscherelemente, bzw. Kühldeckenkonstruktionen aus solchen Flächenwärmetauscherelementen, die eine andere Geometrie aufweisen, und die z. B. quadratisch ausgebildet sind.

Bei dem Ausführungsbeispiel des Flächenwärmetauscherelementes 13 gemäß Fig. 3 ist ein Rohrleitungssystem 16 vorgesehen, welches zwei Leitungszweige oder Rohrleitungsabschnitte 15a und 15b aufweist. Die Zahl und die Form der Leitungsabschnitte sind allerdings beliebig.

Bei Betrachtung des Leitungsweges des Kühlmediums durch das Rohrsystem 16 hindurch gelangt das Kühlmedium unter Annahme einer Flussrichtung von links nach rechts gemäß Fig. 3, zunächst über einen Anschlussstutzen 38a in das Rohrleitungssystem 16, daraufhin zu einer Verzweigungsstelle 36, an der eine Aufteilung der beiden Medienströme in zwei Teilströme erfolgt. Schließlich fließen die Medienströme im Bereich einer Zusammenflussstelle 37 wieder zusammen und können durch den Stutzen 38b austreten.

Jeder der Stutzen 38a, 38b ist mit einem nicht dargestellten Stutzen eines ebenfalls nicht dargestellten benachbarten Flächenwärmetauscherelementes 13 verbunden, so dass insgesamt, entsprechend der Größe der Gebäudedecke und der Zahl der anzubringenden Flächenwärmetauscherelemente, ein geschlossener Kühlmediumkreislauf erreichbar ist.

Angemerkt sei an dieser Stelle, dass es sich bei dem durch das Rohrleitungssystem 16 hindurch fließenden Medium um ein Kühlmedium oder um ein Heizmedium handeln kann, z. B. um Wasser.

Insbesondere die geraden Rohrleitungsabschnitte 15a, 15b sind unter Zuhilfenahme von Wärmeleitfolien 17a, 17b in an sich bekannter Weise mit der metallischen Trägerplatte 14 verbunden. Diesbezüglich kann auf ältere Druckschriften der Anmelderin verwiesen werden, die diese Art der thermischen und mechanischen Verbindung der Rohrleitungsabschnitte mit einer Trägerplatte beschreiben.

Die Inhalte der deutschen Patentanmeldung DE 10 2010 018 162 A1, der deutschen Patentanmeldung DE 10 2012 014 825 A1, der deutschen Patentanmeldung DE 10 2012 014 826 A1 und der deutschen Patentanmeldung DE 10 2013 008 717 A1 werden hiermit, auch zum Zwecke der Bezugnahme auf einzelne oder mehrere Merkmale, in den Inhalt der vorliegenden Patentanmeldung mit eingeschlossen.

Das Flächenwärmetauscherelement 13 wird als eine Art Modul vorkonfektioniert.

Die Erfindung befasst sich nun mit der mechanischen und thermischen Anbindung eines solchen Flächenwärmetauscherelementes an die Deckenunterkonstruktion 12.

Hierzu sieht die Erfindung als erste wesentliche Besonderheit zunächst ein Unterprofil 18 vor, welches in drei Ausführungsbeispielen gemäß den Figuren 4, 5 und 9 dargestellt ist.

Das Unterprofil 18c gemäß Fig. 4 ist besonders einfach ausgebildet, und weist einen im Wesentlichen L-förmigen Querschnitt auf. Es umfasst einen Unterdeckungsabschnitt 21 und einen Verbindungsabschnitt 22.

Das Ausführungsbeispiel 18 eines Unterprofils gemäß Fig. 5 ist demgegenüber unterschiedlich ausgebildet, und weist zusätzlich noch einen Anbindungsabschnitt 23 auf.

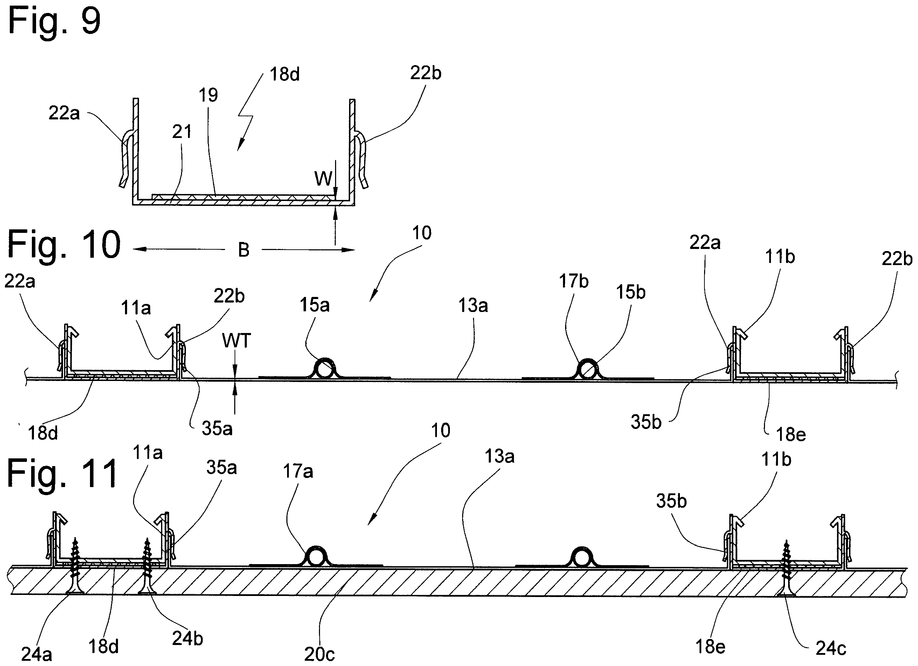

Das Ausführungsbeispiel der Fig. 9 zeigt schließlich ein Unterprofil 18d, welches wiederum unterschiedlich ausgebildet ist.

Zunächst soll das Ausführungsbeispiel der Fig. 5 näher betrachtet werden:
Dieses umfasst einen Verbindungsabschnitt 22, der im Wesentlichen U-förmig ausgebildet ist, und eine nach unten gerichtete Aufnahme aufweist. Diese dient dazu, einen Umbiegungsabschnitt 35 eines Randabschnittes einer Trägerplatte 14 (s. insbesondere rechter unterer Randbereich der Trägerplatte 14a in Fig. 6) in sich klemmend aufzunehmen. Wie dies im Detail geschieht, wird später noch erörtert.

Bereits jetzt sei jedenfalls festgehalten, dass der Verbindungsbereich 22 unmittelbar an dem Unterprofil 18 befestigt ist, und mit diesem einstückig, stoffschlüssig verbunden ist. Der Verbindungsbereich 22 ist durch Umbiegung, bzw. Abkantung des zunächst flach liegenden Werkstückes, aus dem das Unterprofil 18 geformt wird, bereitgestellt.

Das Unterprofil 18 gemäß Fig. 5 weist darüber hinaus einen Anbindungsabschnitt 23 auf. Dieser umfasst - unter Bezugnahme auf Fig. 5 - einen Vertikalschenkel 26, einen Horizontalschenkel 27, einen zweiten Vertikalschenkel 28, einen zweiten Horizontalschenkel 29 und einen dritten Vertikalschenkel 30. Der Anbindungsabschnitt 23 ist nach Art eines Bischofsstabes ausgebildet.

Die bezogen auf Fig. 5 obere Seite, d. h. Stirnfläche, des dritten Vertikalschenkels 30 ist als Anlagefläche 31 bezeichnet.

Zwischen dem Verbindungsabschnitt 22 und dem Anbindungsabschnitt 23 befindet sich der Unterdeckungsabschnitt 21.

Dieser weist eine Breite B auf, die geringfügig größer ist als die Breite BP eines C-Profils 11 (vgl. Fig. 6).

Auf der Oberseite des Unterdeckungsabschnittes 21 ist ein Doppelklebeband 19 angeordnet.

Die Montage einer erfindungsgemäßen Kühldeckenkonstruktion 10 soll wie folgt geschildert werden:
Unter der Annahme, dass die Unterdeckenkonstruktion 12 fertiggestellt ist, wird zunächst ein Unterprofil 21 gemäß Fig. 5 an dem C-Profil 11 befestigt. Hierzu wird das bereits auf dem Unterprofil 18 festgeklebte Doppelklebeband durch Lösen der oberen Schutzschicht des Doppelklebebandes vorbereitet, und sodann wird das Unterprofil 18 gemäß Fig. 5 an die Unterseite eines C-Profils, z. B. jeweils eines C-Profils 11a und eines C-Profils 11b, gemäß Fig. 1 herangebracht und daran festgeklebt.

Sodann kann eine Trägerplatte 14a in den Anbindungsabschnitt 23 eingehängt werden. Die Trägerplatte 14a ist hierzu mit einem Umbiegungsabschnitt 34 versehen, der einen Vertikalschenkel 32 und einen Horizontalschenkel 33 umfasst. Der Umbiegungsabschnitt 34 ist insoweit im Wesentlichen klauenartig ausgebildet.

Der Verbindungsabschnitt 23 des Unterprofils 18 ist insgesamt derartig ausgebildet, dass er eine Aufnahme für den Umbiegungsabschnitt 34 bereitstellt.

Zur Montage des Flächenwärmetauscherelementes 13a gemäß Fig. 6 muss insoweit nur der Umbiegungsabschnitt 34 soweit in den Innenraum des klauenartigen Anbindungsabschnittes 23 hinein verbracht werden, bis dort eine Verhakung stattfindet. Auf Grund des Eingriffes des dritten Vertikalschenkels 30 in den klauenartig ausgebildeten Umbiegungsabschnitt 34 ist ein Formschluss erreicht, der für eine Vorbefestigung sorgt.

Fig. 6 zeigt den Zustand, in dem eine solche Verhakung bereits erfolgt ist.

Ausgehend von dem in Fig. 6 dargestellten Zustand kann nun das Flächenwärmetauscherelement 13a entgegen dem Uhrzeigersinn um eine im Bereich der Auflagefläche 31 gebildete Schwenkachse um etwa 65° nach links verschwenkt werden. Die Verschwenkbewegung endet, wenn der Umbiegungsabschnitt 35 in Form des abgewinkelten Flansches an der Trägerplatte 14 mit der im Wesentlichen U-förmigen Aufnahme des Verbindungsabschnittes 22b des bezüglich Fig. 6 rechten C-Profils 11b in Eingriff gerät.

Durch Aufnahme des Umbiegungsabschnittes 35 in dem Verbindungsabschnitt 22 wird eine Klemmverbindung bewirkt. Diese kann z. B. durch nicht dargestellte, wiederhakenartige Halterungselemente auch sicher und stabil ausgebildet sein.

Denkbar ist dabei auch, dass entlang der axialen Länge des zylindrisch ausgebildeten Unterprofils 18 mehrere, voneinander beabstandete Verhakungselemente oder Halteflächen angeordnet werden.

Der Verbindungsbereich 22 sorgt aber nicht nur für einen mechanischen Halt der Trägerplatte 14 an dem Unterprofil, sondern zugleich auch für einen guten thermischen Kontakt zwischen dem Unterprofil 18 und der Trägerplatte 14. Das Unterprofil 18 ist also über den Verbindungsabschnitt 22 thermisch an die Trägerplatte 14 angebunden.

Dabei ist zu beachten, dass die Verbindung, bzw. Kopplung zwischen dem Anbindungsabschnitt 23 und dem Umbiegungsabschnitt 34 der Trägerplatte zwar ebenfalls eine sichere mechanische Verbindung gewährleistet. Im Bereich dieser mechanischen Kopplung ist allerdings - jedenfalls nicht zwingend - eine gute thermische Kopplung erreicht oder erforderlich.

Es genügt für die Wirkungsweise der Erfindung, wenn das Unterprofil 18 nur einseitig thermisch an eine Trägerplatte 14 angebunden ist.

Fig. 2 zeigt eine Darstellung einer fertig hergestellten Deckenkonstruktion 10. Hier ist eine Gipskartonplatte 20a, 20b, unter Zuhilfenahme von Befestigungsschrauben 24a, 24b, 24c mit dem jeweiligen C-Profil 11a, 11b, verschraubt.

Die Befestigungsschrauben 24a, 24b durchdringen dabei sowohl den Unterdeckungsabschnitt 21 des Unterprofils 18, als auch das C-Profil 11 selbst.

Die Wandstärke W des Unterprofils 18 ist dabei so gewählt, dass herkömmliche Befestigungsschrauben 24a, 24b zum Festschrauben von Gipskartonplatten 20 eingesetzt werden können, und auch den Unterdeckungsabschnitt 21 auf einfache Weise durchdringen können. Vorzugsweise beträgt die Wandstärke W des Unterdeckungsabschnittes 21 bei Verwendung eines Unterprofils aus Aluminium etwa 0,5 mm bis 0,6 mm.

Die Wandstärke WT der Trägerplatte 14 des Flächenwärmetauscherelementes 13 ist demgegenüber größer wählbar, und kann beispielsweise, für den Fall, dass die Trägerplatte aus Aluminium besteht, etwa 1 mm betragen.

Gemäß Fig. 2 ist der Unterdeckungsabschnitt 21 des Unterprofils 18a zur Hälfte von der Gipskartonplatte 20a und zur anderen Hälfte von der Gipskartonplatte 20b abgedeckt.

Wärmebildaufnahmen der Unterseite der so gebildeten Deckenkonstruktion 10 zeigen, dass eine sehr gleichmäßige Temperaturverteilung erreicht wird. Die Kühlleistung ist im Bereich der Metallprofile 11a, 11b nicht vermindert. Durch Anordnung und Befestigung eines gesonderten Unterprofils 18a an dem C-Profil 11 und einer zumindest einseitigen thermischen Anbindung des Unterprofils an die Trägerplatte 14 des Flächenwärmetauscherelementes können eine sehr homogene, gleichmäßige Kühlleistung, bzw. ein gleichmäßiger Wärmetausch erreicht werden.

Ausweislich des Ausführungsbeispiels der Fig. 4 ist es von der Erfindung auch umfasst, wenn das Unterprofil 18c lediglich einen Verbindungsabschnitt 22 aufweist, aber keinen Anbindungsabschnitt 23. In dieser besonders einfachen Form ist das Unterprofil 18 im Wesentlichen L-förmig ausgebildet.

Bei dieser Ausführungsform kann vorgesehen sein, dass das Flächenwärmetauscherelement 13 nicht dargestellte Montagehilfsmittel aufweist, mit denen ein Randbereich der Trägerplatte 14 unmittelbar an einem Metallprofil 11a befestigt wird, beispielsweise um einen Vormontagezustand zu gewährleisten. Lediglich der gegenüberliegende andere Randbereich der Trägerplatte wird, unter Zuhilfenahme eines Umbiegungsbereiches 35, wie in Fig. 6 dargestellt, in den Verbindungsbereich 22 des Unterprofils 18c der Fig. 4 eingeklemmt, und sorgt für einen mechanischen und thermischen Kontakt.

Bei einem alternativen Ausführungsbeispiel eines Unterprofils 18d gemäß Fig. 9 sind zwei Verbindungsbereiche 22 vorgesehen. Dieses Unterprofil 18d ist insoweit, bezogen auf eine Längsmittelachse, im Wesentlichen spiegelsymmetrisch ausgebildet.

Die Figuren 10 und 11 zeigen den Einsatz und die Bildung einer erfindungsgemäßen Kühldeckenkonstruktion unter Verwendung dieses Unterprofils.

Hier wird die Trägerplatte 14, die an ihren beiden Randbereichen mit gleichartig ausgestalteten Umbiegungsbereichen 35a, 35b ausgestattet ist, die nur einfach abgekantet sind, jeweils klemmend in die entsprechenden U-förmigen Aufnahmen der Verbindungsbereiche 22a, 22b eingesetzt. Das Unterprofil 18d ist insoweit beidseitig thermisch an die jeweils benachbarten Trägerplatten 14 angebunden.

Insoweit sei an dieser Stelle darauf hingewiesen, dass ein guter thermischer Kontakt zwischen einem Verbindungsabschnitt 22, 22a, 22b eines Unterprofils 18, 18c, 18d und einer Trägerplatte 14 dadurch zustande kommt, dass ein möglichst großflächiger Kontakt erreicht wird. Durch Vorsehung eines Umbiegungsabschnittes 35, 35a, 35b, der jeweils in eine im Wesentlichen U-förmige klemmende Aufnahme eingesteckt wird, und großflächig an den entsprechenden Flächen dieser Aufnahme anliegt, wird ein solcher guter thermischer Kontakt erreicht.

Angemerkt sei an dieser Stelle, dass sowohl die C-Profile 11, 11a, 11b, als auch die Unterprofile 18, 18c, 18d, sowie schließlich auch die Umbiegungsbereiche 34, 35, 35a, 35b im Wesentlichen zylindrisch ausgebildet sind, und sich - bezogen auf die Papierebenen der Figuren 1, 2 und 4 bis 11 jeweils aus der Papierebene heraus dem Betrachter entgegenstrecken.

Bei Betrachtung der Figuren 2 und 11 in Zusammenschau wird deutlich, dass die anzubringenden Gipskartonplatten 20c auch derartig groß bemessen sein können, dass mehrere Flächenwärmetauscherelemente 13 von einer Gipskartonplatte 20c gemeinsam übergriffen werden können.

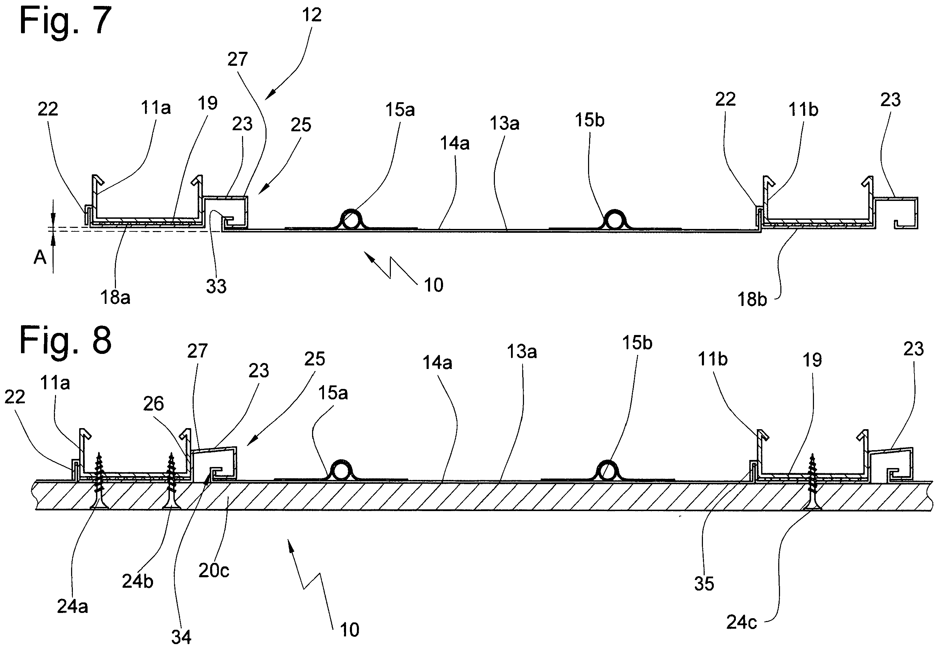

Schließlich ist ausweislich Fig. 7 ersichtlich, dass der Anbindungsbereich 23 auch eine Spannvorrichtung 25 darstellen oder umfassen kann. Die Spannvorrichtung 25 sorgt dafür, dass in einem Vormontagezustand gemäß Fig. 7 die Trägerplatte 14a des Flächenwärmetauscherelementes 13a über die Unterseite des C-Profils 11a hinaus nach unten, bzw. über die Unterseite des bereits angebrachten Unterprofils 18a hinaus nach unten vorsteht. Das Maß dieses Überstandes ist mit dem Abstand A in Fig. 7 bezeichnet.

Bei Anbringung der Gipskartonplatte 20, insbesondere bei Durchführung des Schraubvorganges, wird die Gipskartonplatte 20 gegen die Federkraft der Spannvorrichtung 25 und damit gegen die Trägerplatte 14a gespannt. Im fertig montierten Zustand gemäß Fig. 8 wird - anders ausgedrückt - unter Zuhilfenahme der Spannvorrichtung 25 die Trägerplatte 14a mit Ihrer Unterseite gegen die Oberseite der Gipskartonplatte 20c beaufschlagt oder vorgespannt. Hierdurch kann eine sehr satte, großflächige Anlage der Trägerplatte 14 auf der Gipskartonplatte 20 erreicht werden, was einen optimierten thermischen Kontakt ermöglicht.

Die Spannkraft der Spannvorrichtung 25 wird insoweit aus dem als Federschenkel fungierenden horizontalen Schenkel 27 des Anbindungsabschnittes 23 hergeleitet, bzw. aus dessen Anbindung an den vertikalen Schenkel 26.

Dabei sei der guten Ordnung halber noch angemerkt, dass sich die Darstellungen des Unterprofils 18 gemäß Fig. 5 und die Darstellung des Unterprofils 18a in Fig. 7 geringfügig unterscheiden.

Bei dem Ausführungsbeispiel eines Unterprofils 18 gemäß Fig. 5 liegen der Unterdeckungsabschnitt 21 und der zweite horizontale Abschnitt 29 in einer Ebene. Hingegen steht bei dem Ausführungsbeispiel der Fig. 7 der zweite horizontale Abschnitt 29 des Anbindungsabschnittes 23 gegenüber dem Unterdeckungsabschnitt 21 des Unterprofils 18a geringfügig nach unten vor.

Hier kann - je nach Materialwahl des Unterprofils 18a und in Abhängigkeit von der Höhe der auszuübenden Spannkraft der Spannvorrichtung 25 - auch eine andere Geometrie Anwendung finden.

Bei einem weiteren Ausführungsbeispiel ist die Klimadeckenkonstruktion 10, die zuvor auch als Kühldeckenkonstruktion bezeichnet worden ist, nicht an der Decke eines Gebäudes, sondern an der Wand eines Gebäuderaumes angeordnet.

Hierzu muss sich der Betrachter der Figur 2 lediglich vorstellen, dass die Figur 2 um 90° gegen den Uhrzeigersinn gedreht wird. Die Wandfläche des Gebäuderaumes, an der eine Befestigung der Konstruktion 10 erfolgt, ist demnach vertikal ausgerichtet.

Die Gipskartonplatte 20a, 20b ist dann rauminnenseitig der Metallprofile 11a, 11b angeordnet.

Auch hier spielt die thermische Aktivierung der Abschnitte der Gipskartonplatten, die die Metallprofile 11a, 11b überdecken bzw. unterdecken, bzw. bei diesem Ausführungsbeispiel rauminnenseitig übergreifen, eine wesentliche Rolle. Bei der derartigen Anwendungen, bei denen eine wandseitige Festlegung der Deckenkonstruktion 10, im Gegensatz zu einer deckenseitigen Festlegung der Deckenkonstruktion 10 erfolgt, kann insbesondere vorgesehen werden sein, die Verbindungsabschnitte 22 und die Anbindungsabschnitte 23 des Unterprofils anders, als in den Figuren gezeigt, auszubilden, um eine für die vertikale Ausrichtung der Deckenkonstruktion insgesamt optimierte mechanische Verbindung zu erreichen und um eine einfache Montage der jeweiligen Trägerplatte an dem Unterprofil zu ermöglichen.

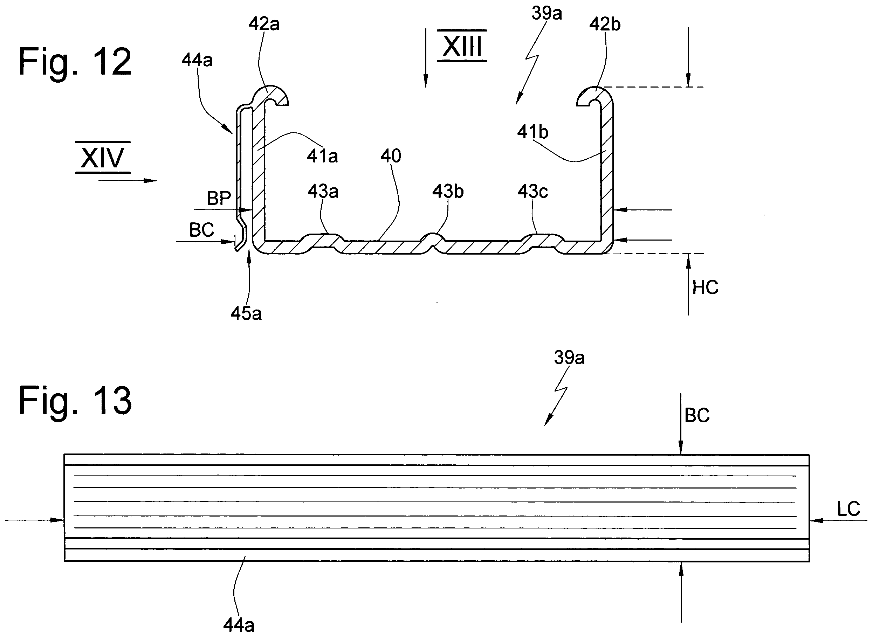

Nachfolgend soll auf einen besonderen Aspekt der Erfindung gemäß der Ausführungsbeispiele der Figuren 12 bis 17 verwiesen werden:
Ausweislich Fig. 12 ist eine erste Besonderheit darin zu sehen, dass ein C-Profil, welches in seiner Gesamtheit mit 39a bezeichnet ist, gemäß einem Aspekt der Erfindung aus Aluminium besteht. Eine alternative Materialwahl kann auch in Kupfer oder Stahl oder anderen gut wärmeleitfähigen Materialien bestehen. Die Besonderheit des in Fig. 12 dargestellten C-Profils liegt des Weiteren darin, dass ein Verbindungsabschnitt 44a, der eine Bewerkstelligung einer Steckverbindung mit einer Trägerplatte ermöglicht, integral, d. h. werkstoffeinheitlich, stoffschlüssig, an dieses C-Profil 39a mit angeformt ist.

Das C-Profil 39a der Fig. 12 weist einen Bodenabschnitt 40 und zwei davon im Wesentlichen rechtwinklig abstehende Seitenabschnitte 41a und 41b auf. Die Seitenabschnitte 41a, 41b weisen jeweils in ihrem feien Endbereich einen Umbiegungsbereich 42a, 42b auf. Im Bereich des Bodenabschnittes 40 können eine Mehrzahl von angedeuteten, in Axialrichtung, d. h. längs verlaufenden, Sicken 43a, 43b, 43c vorgesehen sein.

Die Grundabmessungen des C-Profils 39a gemäß Fig. 12 umfassen eine Breitenerstreckung BP, die der Breitenerstreckung BP eines herkömmlichen C-Profils 11 entspricht, wie dies beispielsweise in den Figuren 1, 2 und 6 dargestellt ist. Auch die Höhenerstreckung HC des C-Profils 39a entspricht der Höhenerstreckung eines herkömmlichen C-Profils 11b, 11c.

Auch die Wandstärken von Bodenabschnitt und Seitenabschnitt entsprechen im Wesentlichen den Wandstärken herkömmlicher C-Profile aus Stahl.

Wie sich aus den Figuren 12, 13 und 14 in der Gesamtschau ergibt, weist das C-Profil 39a eine axiale Länge LC auf, die im Wesentlichen einer axialen Länge herkömmlicher C-Profile entspricht. Es kann sich dabei beispielsweise um Längen von 2 m, 3 m oder dergleichen handeln.

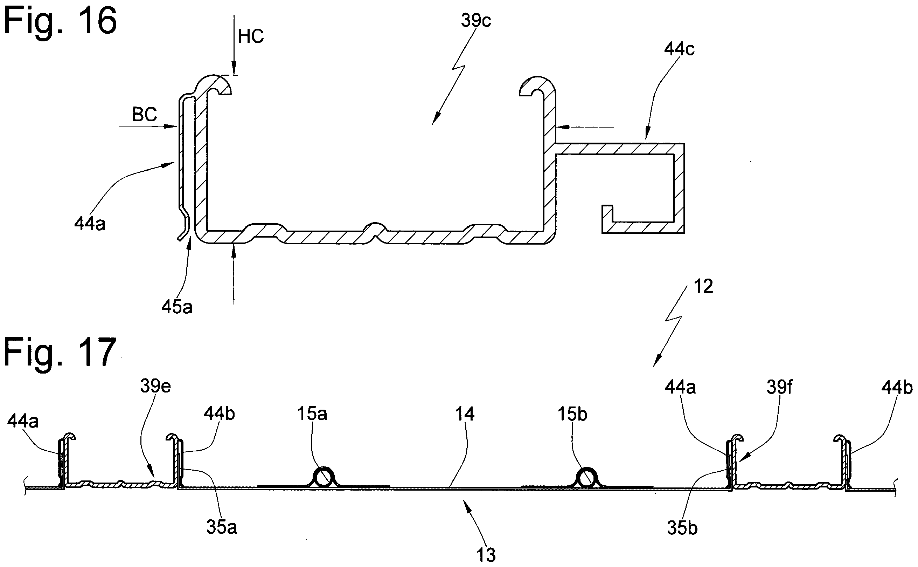

Das C-Profil 39 der Figuren 12 bis 14 besteht aus Aluminium, und ist insoweit in hervorragendem Maße wärmeleitfähig. Dies ermöglicht eine einfache, thermische Anbindung des Bodenabschnittes 40 des C-Profils 39a an die beispielsweise in Fig. 17 dargestellte Trägerplatte 14, zum Zwecke einer Aktivierung des Bodenabschnittes 40.

Das C-Profil 39a gemäß den Figuren 12 bis 14 weist einen Verbindungsabschnitt 44a auf, der eine schlitzförmige Aufnahme 45a bereitstellt. Die Gesamtabmessung der Breitenerstreckung BC des C-Profils 39a der Fig. 12 - unter Berücksichtigung des Verbindungsabschnittes 44a - ist geringfügig größer als die Breitenerstreckung BP eines herkömmlichen C-Profils.

Die Aufnahme 45a dient - wie beispielsweise aus der Darstellung der Fig. 17 ersichtlich, der steckbaren und klemmenden Aufnahme des umgebogenen Umbiegungsabschnittes 35a der Trägerplatte 14. Hier kann auf die zuvor beschriebene Weise (vgl. insbesondere die vorherige Figurenbeschreibung, beispielsweise zu dem Ausführungsbeispiel der Fig. 11) ein Klemmschluss zwischen Trägerplatte 14 und Verbindungsabschnitt 44a erreicht werden.

Der Verbindungsabschnitt 44a erstreckt sich bei dem Ausführungsbeispiel der Fig. 12 kontinuierlich, durchgehend in Axialrichtung. Der in Fig. 12 ersichtliche Querschnitt des C-Profils, einschließlich des Verbindungsabschnittes 44a, setzt sich also in Betrachtungsrichtung der Fig. 12 senkrecht zur Papierebene fort.

Bei anderen, nicht dargestellten Ausführungsbeispielen der Erfindung kann an dem C-Profil 39a, wie es in Fig. 12 dargestellt ist, eine in Axialrichtung diskontinuierliche Anordnung oder Positionierung von Verbindungsabschnitten 44a oder eine Mehrzahl von diskreten, voneinander beabstandeten Aufnahmen 45a vorgesehen sein.

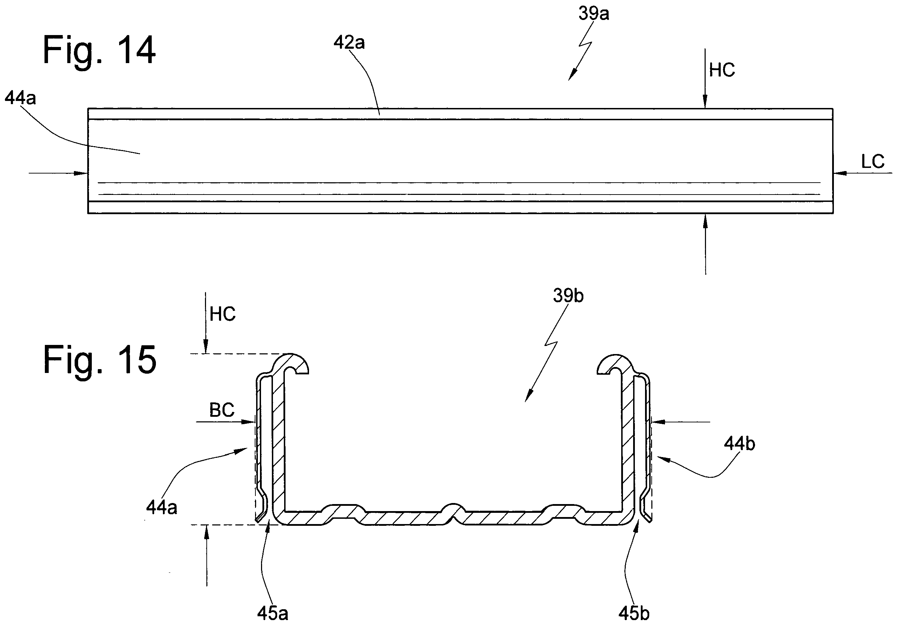

Während Fig. 12 ein Ausführungsbeispiel eines erfindungsgemäßen C-Profils zeigt, bei dem ein Verbindungsabschnitt 44a lediglich einseitig angebracht ist, zeigt demgegenüber das Ausführungsbeispiel der Fig. 15 eine im Wesentlichen spiegelsymmetrische Anordnung mit zwei beidseitig des C-Profils 39b angeordneten Verbindungsabschnitten 44a und 44b. Die Darstellung einer Klimadeckenkonstruktion in einem Vormontagezustand, ohne Darstellung der Gipskartonplatte, gemäß Fig. 17, greift dabei auf Ausführungsbeispiele von C-Profilen gemäß Fig. 15 zurück.

Der guten Ordnung halber sei darauf hingewiesen, dass auch die Ausführungsbeispiele von C-Profilen 39b, 39c gemäß den Figuren 15 und 16, sowie 17, vollständig aus Aluminium bestehen, alternativ aber auch aus Kupfer bestehen können.

Auf die Anordnung eines, ein C-Profil untergreifenden Unterdeckungsabschnittes 21, bzw. auf ein gesondertes Unterprofil 18 kann bei den Ausführungsbeispielen der Figuren 12 bis 17 verzichtet werden. Hier ist das in den Ausführungsbeispielen 1 bis 11 beschriebene, gesonderte Unterprofil sozusagen in das C-Profil 39a, 39b, 39c integriert.

Das gesonderte Unterprofil wird bei den Ausführungsbeispielen der Figuren 12 bis 17 durch eine besondere Materialwahl des Materials des C-Profils erreicht.

Dadurch, dass das C-Profil 39a, 39b, 39c statt - wie herkömmlich vorgesehen, aus Stahl - nunmehr aus Aluminium bereitgestellt wird, kann die thermische Verbindung zwischen Trägerplatte 14 und C-Profil 39 erheblich vereinfacht werden und eine Aktivierung des Bodenabschnittes 40 des C-Profils überhaupt erst erreicht werden.

Der Vollständigkeit halber sei darauf hingewiesen, dass Fig. 16 eine weitere Ausführungsform eines C-Profils 39c zeigt, bei der nur ein Verbindungsabschnitt 44a vorgesehen ist, und auf der gegenüberliegenden, bezogen auf Fig. 16 rechten Seite, ein Anbindungsabschnitt 23 vorgesehen ist, der - analog zu dem Anbindungsabschnitt 23 des Ausführungsbeispiels der Fig. 6 - dazu dienen kann, die Trägerplatte 14, bzw. das Flächenwärmetauscherelement 13 lediglich mechanisch zu befestigen.

Des Weiteren sei angeführt, dass an Stelle der Anordnung eines Aufnahmeschlitzes 45a, wie bei den Ausführungsbeispielen der Figuren 12 bis 17 dargestellt, auch andere geeignete Mittel zur mechanischen und thermischen Kopplung der Trägerplatte 14 an das aus einem gut wärmeleitenden Material, wie Aluminium, bestehende C-Profil 39a, 39b, 39c im Rahmen der Erfindung vorgesehen werden können.

Schließlich sei darauf hingewiesen, dass von der Erfindung auch noch weitere Ausführungsbeispiele von C-Profilen umfasst sind, die im Wesentlichen den C-Profilen der Figuren 12 bis 17 entsprechen, mit der Maßgabe, dass diese geänderten Ausführungsbeispiele aus Stahl bestehen, und gegenüber dem Stand der Technik vergrößerte Wandstärken der Seitenabschnitte und des Bodenabschnittes 40 aufweisen. Bei diesen Ausführungsbeispielen wird ein Verbindungsabschnitt 44 ebenfalls mit integral an das C-Profil angeformt. Zur Erzielung einer guten thermischen Ankopplung der Bodenplatte des C-Profils an die Trägerplatte ist hier allerdings eine gegenüber Stahl-C-Profilen des Standes der Technik größere Wandstärke vorgesehen, um die gewünschten Wärmeleiteigenschaften zu erhalten.

## Patentansprüche

1. Kühldeckenkonstruktion (10) für einen Gebäuderaum, umfassend Flächenwärmetauscherelemente (13), die jeweils eine Trägerplatte (14a) aufweisen, auf der von einem Kühl- oder Heizmedium durchströmbare, thermisch mit der Trägerplatte in Verbindung stehende Rohrleitungsabschnitte (15a, 15b) angeordnet sind, wobei die Trägerplatte mechanisch an zwei zueinander parallel ausgerichtete, deckenseitig festgelegte C-Profile (11a, 11b) angebunden ist, **dadurch gekennzeichnet, dass** die mechanische Anbindung der Trägerplatte an zumindest ein C-Profil unter Zuhilfenahme eines starr ausgebildeten Unterprofils (18, 18a) erfolgt, welches gesondert von der Trägerplatte mittels Befestigungsmitteln (19) an dem C-Profil (11a, 11b) festgelegt ist, und welches einen Verbindungsabschnitt (22, 22a) aufweist, an den die Trägerplatte zur Bewerkstelligung einer mechanischen und thermischen Kopplung der Trägerplatte mit dem Unterprofil ankoppelbar ist, wobei die Trägerplatte (14) und das dieser Trägerplatte (14) zugehörige Unterprofil (18) jeweils gemeinsam von einer Gipskartonplatte (20) untergriffen ist, und/oder wobei das Unterprofil (18) jeweils von zwei einander benachbarten Gipskartonplatten (20a, 20b) untergriffen ist.

2. Kühldeckenkonstruktion nach einem der vorangegangenen Ansprüche, **dadurch gekennzeichnet, dass** das Unterprofil (18, 18a) zwei Verbindungsabschnitte (22a, 22b) oder einen Verbindungsabschnitt (22) und einen Anbindungsabschnitt (23) auf zwei unterschiedlichen Seiten des Unterdeckungsabschnittes (18) zur Bewerkstelligung einer mechanischen Verbindung des an dem C-Profil festgelegten Unterprofils (18) mit zwei unterschiedlichen Trägerplatten (14a, 14b) aufweist.

3. Kühldeckenkonstruktion nach einem der vorangegangenen Ansprüche, **dadurch gekennzeichnet, dass** die Trägerplatte (14) eine Wandstärke (WT) aufweist, die größer ist als die Wandstärke (W) des Unterdeckungsabschnittes (21), wobei die Wandstärke (WT) der Trägerplatte (14) insbesondere etwa 1 mm beträgt.

4. Kühldeckenkonstruktion nach einem der vorangegangenen Ansprüche, **dadurch gekennzeichnet, dass** der Verbindungsabschnitt (22, 22a) Klemmmittel oder Clipsmittel oder Formeingriffsmittel aufweist, die insbesondere mit komplementär ausgestalteten Gegenklemmmitteln (35) oder Gegenclipsmitteln oder Gegenformeingriffsmitteln an der Trägerplatte in Eingriff bringbar sind.

5. Kühldeckenkonstruktion nach einem der vorangegangenen Ansprüche, **dadurch gekennzeichnet, dass** das Unterprofil (18) vermittels einer Klebung, insbesondere vermittels eines Doppelklebebandes (19), an dem C-Profil (11), insbesondere an der Unterseite der C-Profils festgelegt ist.

6. Kühldeckenkonstruktion (10) nach einem der vorangegangenen Ansprüche, **dadurch gekennzeichnet, dass** die Trägerplatte (14) in dem Vormontagezustand über eine Unterseite des C-Profils hinaus nach unten vorsteht, und gegen die Federkraft einer Spanneinrichtung (25) bei Anbringung der Gipskartonplatte in eine bündige Anordnung zu der Unterseite des C-Profils verlagerbar ist.

7. Kühldeckenkonstruktion nach Anspruch 6, **dadurch gekennzeichnet, dass** die Spanneinrichtung (25) an dem Unterprofil angeordnet ist.

8. Verfahren zur Montage einer Kühldecke (10), insbesondere zur Montage einer Kühldecke nach einem der Ansprüche 1 bis 7, umfassend die folgenden Schritte:
a) Anbringen einer Deckenunterkonstruktion (12) mit zueinander parallel ausgerichteten C-Profilen (11a, 11b) an der Decke eines Gebäuderaumes,
b) Anbringen, insbesondere Kleben, von Unterprofilen (18) an der Unterseite der C-Profile, wobei die Unterprofile jeweils wenigstens einen Unterdeckungsabschnitt (21), mit dem sie eine Unterseite des C-Profils unterdecken, und einen Verbindungsabschnitt (22) oder einen Anbindungsabschnitt (23) aufweisen, an den eine Trägerplatte (14) ankoppelbar ist, wobei auf der Trägerplatte von einem Kühl- oder Heizmedium durchströmbare, thermisch mit der Trägerplatte in Verbindung stehende Rohrleitungsabschnitte (15a, 15b) angeordnet sind,
c) Bewerkstelligen einer Verbindung zwischen dem jeweiligen Verbindungsabschnitt (22) oder dem Anbindungsabschnitt (23) und der Trägerplatte (14),
d) Anbringen einer Gipskartonplatte (20a, 20b, 20c) mittels Schrauben (24a, 24b) an den C-Profilen, wobei die Schrauben den jeweiligen Unterdeckungsabschnitt (21) durchgreifen.

## Claims

1. Construction for a climate ceiling (10) for a room of a building, comprising flat heat exchanging elements (13), each comprising a support plate (14a), on which pipe sections (15a, 15b) are arranged, allowing passage of a cooling or heating medium therethrough, which pipe sections are thermally connected to the support plate, whereby the support plate is mechanically connected to two parallel aligned C-shaped profiles (11a, 11b) fixedly mounted at a ceiling, **characterized in that** the support plate is mechanically connected to at least one of the C-shaped profiles by means of a rigid bottom profile (18, 18a), which is separately from the support plate connected to the C-shaped profile (11a, 11b) by fastening means (19), and having a connecting section (22, 22a), connectable to the support plate for accomplishing a mechanical and thermal coupling of the support plate to the bottom profile, whereby the support plate (14) and the bottom profile (18) of said support plate (14) each is commonly engaged underneath by a gypsum plaster board (20), and/or whereby the bottom profile (18) each is engaged underneath by two adjacent gypsum plaster boards (20a, 20b).

2. Construction for a climate ceiling according to one of the preceding claims, **characterized in that** the bottom profile (18, 18a) comprises two connecting sections (22a, 22b) or a connecting section and an attachment portion (23) at two different sides of the covering section (18) for accomplishing a mechanical connection of the bottom profile (18) attached to the C-shaped profile with two different support plates (14a, 14b).

3. Construction for a climate ceiling according to one of the preceding claims, **characterized in that** the support plate (14) having a wall thickness (WT) higher than the wall thickness (W) of the covering section (21), the support plate (14) particularly having a wall thickness (WT) of about 1 mm.

4. Construction for a climate ceiling according to one of the preceding claims, **characterized in that** the connecting section (22, 22a) comprises clamping means or clip means or form-engaging means that can particularly be engaged at the support plate by complementarily formed counter clamping means (35) or counter clip means or counter form-engaging means.

5. Construction for a climate ceiling according to one of the preceding claims, **characterized in that** the bottom profile (18) is adhesively bonded, preferably by a double-coated adhesive tape (19), to the C-shaped profile (11), preferably to its bottoms side.

6. Construction for a climate ceiling (10) according to one of the preceding claims, **characterized in that** the support plate (14) in preassembled state protrudes downwards from a bottom side of the C-shaped profile, the support plate being displaceable into a flush arrangement with the bottom side of the C-shaped profile by mounting of the gypsum plaster board against the spring force of a tensioning device (25).

7. Construction for a climate ceiling according to claim 6, **characterized in that** the tensioning device (25) is arranged at the bottom profile.

8. Method of assembling a construction for a climate ceiling (10), particularly of assembling a construction for a climate ceiling according to one of the claims 1 to 7, comprising the steps of:
a) attaching a ceiling substructure (12) with C-shaped profiles (11a, 11b), which are aligned parallel to one another, to the ceiling of a room in a building,
b) attaching, particularly adhesively bonding, of bottom profiles (18) to the bottom side of the C-shaped profiles, the bottom profiles comprising each at least one covering section (21), covering a bottom side of the C-shaped profile, and a connecting section (22) or a attachment portion (23) to which the support plate (14) is couplable, whereby pipe sections (15a, 15b) are arranged on the support plate, allowing passage of a cooling or heating medium therethrough, that are thermally connected to the support plate,
c) accomplishing a connection between the respective connecting section (22) or the attachment portion (23) and the support plate (14),
d) attaching a gypsum plaster board (20a, 20b, 20c) by means of bolts (24a, 24b) to the C-shaped profiles, whereby the bolts engage through the respective covering section (21).

## Revendications

1. Construction de plafond refroidissant (10) pour une pièce de bâtiment, comprenant des éléments d'échangeur de chaleur plats (13), lesquels présentent respectivement une plaque de support (14a), sur laquelle sont disposées des sections de conduits tubulaires (15a, 15b) se trouvant en liaison thermique avec la plaque de support, pouvant être traversées par un fluide de refroidissement ou de chauffage, la plaque de support étant rattachée mécaniquement à deux profilés en C (11a, 11b) fixés côté plafond, et orientés parallèlement l'un et l'autre, **caractérisée en ce que** la liaison mécanique de la plaque de support se fait sur au moins un profilé en C à l'aide d'un sous-profilé (18, 18a) réalisé de manière rigide, lequel est fixé séparément de la plaque de support sur le profilé en C (11a, 11b) au moyen de moyens de fixation (19), et lequel présente une section de raccordement (22, 22a) sur laquelle peut être couplée la plaque de support pour la réalisation d'un couplage mécanique et thermique de la plaque de support avec le sous-profilé, la plaque de support (14) et le sous-profilé (18) associé à cette plaque de support (14) étant saisis par en dessous respectivement ensemble par une plaque de plâtre cartonné (20) et/ou le sous-profilé (18) étant pris par en dessous respectivement par deux plaques de plâtre cartonné (20a, 20b) contiguës.

2. Construction de plafond refroidissant selon la revendication 1, **caractérisée en ce que** le sous-profilé (18, 18a) présente deux sections de raccordement (22a, 22b) ou une section de raccordement (22) et une section de liaisonnement (23) sur deux côtés différents de la section de recouvrement inférieur (18)(*), pour réalisation d'un raccordement mécanique du sous-profilé (18) fixé au profilé en C avec deux plaques de support (14a, 14b) différentes.

3. Construction de plafond refroidissant selon l'une des précédentes revendications, **caractérisée en ce que** la plaque de support (14) présente une épaisseur de paroi (WT) qui est supérieure à l'épaisseur de paroi (W) de la section de recouvrement inférieur (21), l'épaisseur de paroi (WT) de la plaque de support (14) étant notamment d'environ 1 mm.

4. Construction de plafond refroidissant selon l'une des précédentes revendications, **caractérisée en ce que** la section de raccordement (22, 22a) présente des moyens de serrage ou des moyens de clipsage ou des moyens d'encastrement qui peuvent être mis en prise en particulier avec des contre-moyens de serrage (35) conçus de manière complémentaire, ou des contre-moyens de clpisage ou des contre-moyens d'encastrement, au niveau de la plaque de support.

5. Construction de plafond refroidissant selon l'une des précédentes revendications, **caractérisée en ce que** le sous-profilé (18) est fixé au moyen d'un collage, en particulier au moyen d'un ruban adhésif double face (19), au niveau du profilé en C (11), en particulier au niveau de la face inférieure du profilé en C.

6. Construction de plafond refroidissant (10) selon l'une des précédentes revendications, **caractérisée en ce que** dans l'état de prémontage, la plaque de support (14) est en saillie vers le bas au-delà d'une face inférieure du profilé en C et peut être déplacée, contre la force de ressort d'un dispositif de serrage (25), lors de la pose de la plaque de plâtre cartonné, dans une installation affleurante à la face inférieure du profilé en C.

7. Construction de plafond refroidissant selon la revendication 6, **caractérisée en ce que** le dispositif de serrage (25) est disposé au niveau du sous-profilé.

8. Procédé pour le montage d'un plafond refroidissant (10), en particulier pour le montage d'un plafond refroidissant selon l'une des précédentes revendications 1 à 7, comprenant les étapes suivantes :
a) pose d'une construction de plafond refroidissant (12) avec des profilés en C (11a, 11b) orientés parallèlement les uns les autres, au niveau du plafond d'une pièce de bâtiment,
b) pose, notamment collage, de sous-profilés (18) au niveau de la face inférieure des profilés en C, les sous-profilés présentant respectivement au moins une section de recouvrement inférieur (21), avec laquelle ils couvrent la face inférieure du profilé en C, et une section de raccordement (22) ou une section de liaisonnement (23), au niveau de laquelle une plaque de support (14) peut être couplée, des sections de conduits tubulaires (15a, 15b) se trouvant en liaison thermique avec la plaque de support, pouvant être traversées par un fluide de refroidissement ou de chauffage, étant disposées sur la plaque de support,
c) réalisation d'un raccordement entre la section de raccordement (22) respective ou la section de liaisonnement (23) et la plaque de support (14),
d) pose d'une plaque de plâtre cartonné (20a, 20b, 20c) au moyen de vis (24a, 24b) au niveau des profilés en C, les vis passant à travers la section de recouvrement inférieur (21) respective.
